Europäisches Patentamt

(19) European Patent Office  (11) Publication number: **0 197 760**

Office européen des brevets  **A2**

(12) **EUROPEAN PATENT APPLICATION**

(21) Application number: 86302443.6

(22) Date of filing: 02.04.86

(51) Int. Cl.⁴: **H 02 K 5/04**
**H 02 K 5/173, H 02 K 1/18**
**H 02 K 7/116**

(30) Priority: 02.04.85 GB 8508559

(43) Date of publication of application:
15.10.86 Bulletin 86/42

(84) Designated Contracting States:
DE FR IT

(71) Applicant: **Johnson Electric Industrial Manufactory Limited**
**Johnson Building 14-16 Lee Chung Street**
**Chaiwan(HK)**

(72) Inventor: **Wang, Shui Chung**
**22 Belleville Drive, 10/F**
**Repulse Bay(HK)**

(74) Representative: **Higgins, Michael Roger et al,**
**Marks & Clerk 57/60 Lincoln's Inn Fields**
**London WC2A 3LS(GB)**

(54) **An electric motor frame.**

(57) A frame of the motor comprises first and second rigid bearing supports (1 and 2) connected together by connecting members (3 and 4) and formed, respectively, with coaxial internal surfaces (5 and 6) which receive bearings (7) for the shaft (8) of an electric motor. The first bearing support (1) is formed with a radial slot (9) so that, before the bearings (7) are seated within the bearing supports (1 and 2), one end of the shaft (8) can be passed axially through the second bearing support (2) and the other end of the shaft (8) can be moved radially through the slot (9) into and out of a position in alignment with the axis (10) of the surfaces (5 and 6). The slot (9) is narrow enough to ensure that the internal surface (5) is capable of supporting the bearing (7) in all radial directions.

## An Electric Motor

### Field of the Invention

The invention relates to an electric motor having a frame for supporting the rotor bearings of the motor. In particular, although not exclusively, the invention is concerned with a servo-motor.

### Background Art

Where there is no requirement for particular accuracy in the construction of an electric motor, the motor shaft can be mounted in bearings supported in end plates which are interconnected by means of an outer casing. In an alternative mode of construction, the shaft bearings, end plates and outer casing are mounted in a frame.

One known form of electric motor frame comprises first and second bearing supports and connecting means formed integral with the two bearing supports.

In this known form of frame, the bearing supports comprise part-spherical depressions which receive complementary part-spherical bearing members which are clamped in place so as to permit self-aligning rotation of the bearing members in the bearing supports to enable the motor shaft to rotate about an axis passing through both bearing supports.

While this mode of construction is adequate for some forms of electric motor, it is not suitable where the shaft of the motor must always be aligned precisely with the longitudinal axis of the frame, as in the case of a servo-motor where static frictional resistance should remain constant, regardless of the rotational orientation of the shaft.

Disclosure of the Invention

The purpose of the present invention is to reduce the hereinbeforementioned disadvantage of known electric motors and to provide an electric motor which can more effectively ensure that the shaft of the motor is aligned with the longitudinal axis of the frame.

According to the invention there is provided an electric motor comprising a shaft; a rotor mounted on the shaft; two bearings supporting the shaft; first and second bearing supports respectively receiving and supporting the two bearings; and connecting means formed integrally with the first and second bearing supports; wherein the first and second bearing supports are rigid and are formed, respectively, with coaxial first and second internal surfaces which receive and support the two bearings in all radial directions, wherein at least one of the bearing supports has a radial slot, and wherein the bearings have been introduced into the bearing supports by sliding the bearings along the motor shaft after the shaft has been inserted in the supports.

With a construction according to the invention, it is possible to form the first and second internal surfaces in a single machining operation, thus ensuring that these surfaces are precisely centered on a common axis. This is possible where both surfaces lie on the same imaginary right circular cylinder. However, the first and second internal surfaces may also lie on co-axial imaginary frusto-conical surfaces.

The second bearing support may also be provided with a radial slot aligned with the radial slot in the first bearing support. Indeed, both surfaces of revolution may be interrupted also by other gaps so as to be part-cylindrical or part frusto-conical in this additional respect.

In assembling a motor in which only one bearing support has a radial slot, one end of the shaft of the motor is axially inserted into the other bearing support. The other end of the shaft is then moved radially, through the slot in said one bearing support, into alignment with the axis of the two internal surfaces. The bearings are then mounted on opposite ends of the shaft and moved axially into the surfaces formed in the bearing supports. To ensure that the bearing support formed with the slot supports the bearing mounted in this bearing support in all radial directions, it is a simple matter to make the width of the slot very much less than the outer diameter of the bearing.

While the frame is positioned for machining the first and second internal surfaces, a further radial surface, perpendicular to the axis of the first and second internal surfaces, may also be machined, thus providing a radial mounting surface for ensuring that the motor frame can be positioned accurately against a supporting surface. This radial surface is conveniently formed on one of the first and second bearing supports.

The connecting members are preferably spaced equi-angularly around the axis of the internal surfaces and, in a preferred embodiment of the invention in which there are only two connecting members, these connecting members are disposed on diametrically opposite sides of the frame.

The connecting members may be provided with positioning means for positioning stator field means. Where an outer casing is mounted on the frame, in sliding engagement with the mounting members, the stator field means may be supported by the frame and by the outer casing. In this case, the positioning means for the

- 5 -

0197760

stator field means may comprise abutment surfaces and compression spring means such that the stator field means disposed between adjacent connecting members respectively engage abutment surfaces and spring means provided on adjacent connecting members so that the stator field means are held securely in place.

In a preferred embodiment a housing for a gear train is formed integrally with the frame. The housing is formed on an end of the frame and may be of larger diameter than the frame. In this embodiment in particular it is preferred that a casing enclosing the frame and stator means comprises at least two cylindrical shells. The longitudinal edges of the shells preferably face or abut one another adjacent respective connecting members and may be held in place by tangs on the shells engaging in recesses in the frame.

Embodiments of the invention are hereinafter described, by way of example, with reference to the accompanying drawings.

## Brief Description of the Drawings

Figure 1 is a perspective view of one embodiment of an electric motor according the present invention;

Figure 2 is an exploded perspective view of the motor shown in Figure 1, showing the component parts of this motor;

Figure 3 is a plan view of the frame of the electric motor shown in Figures 1 and 2, and

Figures 4, 5 and 6 are a sectional side elevation and oppositee end elevations of the frame shown in Figure 3,

Figure 7 is a cross-section of a second embodiment of an electric motor according to the invention taken along the line VII-VII of Figure 8; and

Figure 8 is a side elevation of the embodiment of Figure 7.

Preferred Modes for Carrying Out the Invention

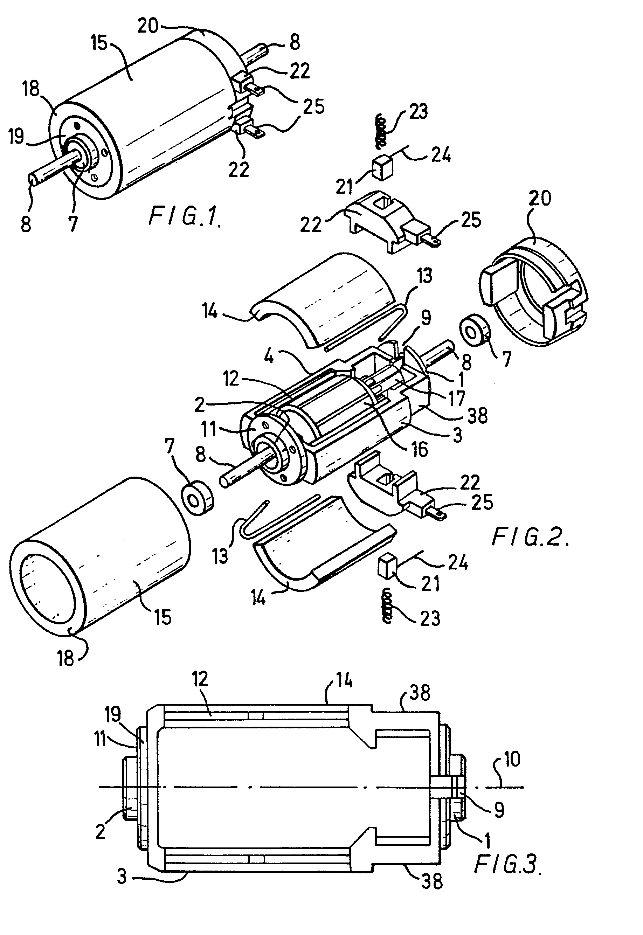

The electric motor shown in Figures 1 and 2 has a rotor comprising an armature 16 and a commutator 17 mounted on a shaft 8 journalled on schematically shown ball bearings 7. The ball bearings 7 are seated in first and second bearing supports 1 and 2 and opposite ends of a die-cast aluminum alloy frame include connecting members 3 and 4 formed integrally with the bearing supports 1 and 2. The connecting members 3 and 4 are formed with guide surfaces 12 and co-operate with compression springs 13 for positioning permanent magnets 14, in secure abutment with an outer casing 15.

The outer steel casing 15 is a frictional sliding fit on the connecting members 3 and 4 of the frame and has an annular rim 18 co-operating with a flange 19 of the

0197760

second bearing support 2 to close one end of the electric motor. The casing 15 co-operates with an end cap 20 which closes the other end of the motor.

Carbon brushes 21 are mounted in brush carriers 22 so as to bear on the commutator 17 under the influence of helical compression springs 23 and braided copper leads 24 from the brushes 21 are connected to terminal members 25 extending from the brush holders 22.

As shown more clearly in Figures 3 to 6, the first and second bearing supports 1 and 2 are formed, respectively, with part-cylindrical and cylindrical surfaces 5 and 6 centered on the longitudinal axis 10 of the frame. This enables both surfaces 5 and 6 to be machined in a single turning operation so as to ensure that both surfaces 5 and 6 are coaxial with each other. In addition, with the frame positioned for machining the surfaces 5 and 6 a radial surface 11 may also be machined on the flange 19 of the second bearing support 2 so as to permit the motor to be fitted accurately to a supporting surface with the axis 10 perpendicular to this supporting surface.

To enable the shaft 10 of the electric motor shown in Figures 1 and 2 to be positioned in ball bearings 7 mounted in the first and second bearing supports 1 and 2, a first bearing support 1 is formed with a radial slot 9 which is much narrower than the outer diameter of the ball bearings 7, but larger than the diameter of the motor shaft 8. With the ball bearings 7 removed from the bearing supports 1 and 2, one end of the motor shaft 8 is inserted axially through the opening defined by the surface 6 formed in the second bearing support 2 and then the other end is moved radially through the slot 9 into the opening defined by the part-cylindrical surface 5 formed in the first bearing support 1. The ball bearings 7 are then slid along the motor shaft 8 into frictional engagement with the first and second surfaces 5 and 6 formed in the first and second bearing supports. The reverse procedure is adopted in order to remove the rotor of the electric motor from the frame.

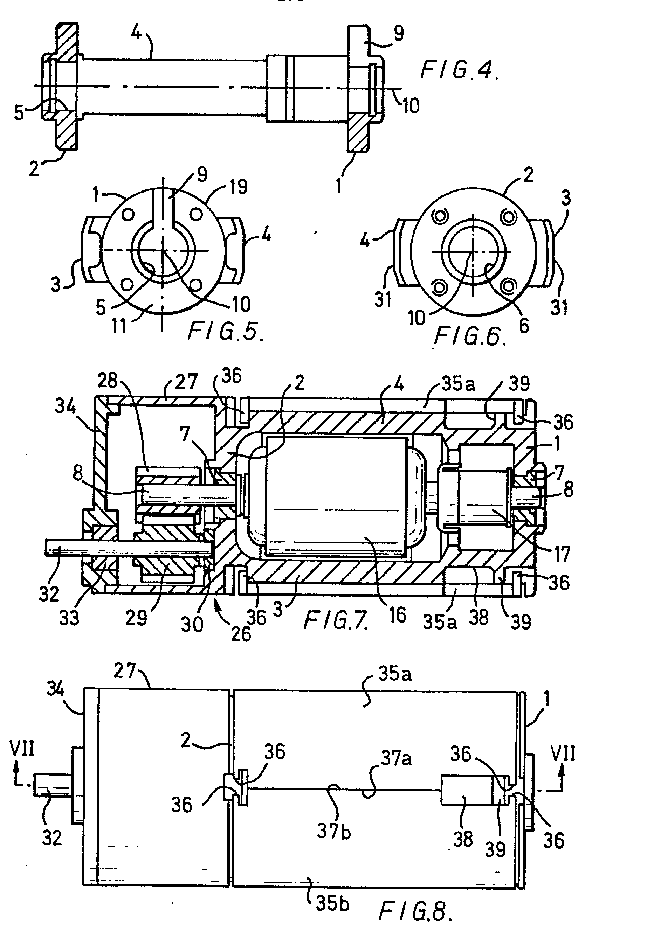

Figures 7 and 8 show a second embodiment of the invention, in which like parts to the embodiment of Figures 1 to 6 are given like reference numerals.

A motor shaft 8 carries a commutator 17 and an armature 16. The shaft 8 is journalled at each end in ball bearings 7 which are seated in supports 1 and 2 at opposite ends of a connecting frame 26 including connecting members 3, 4.

End member 1 has a radial slot a for the embodiment of Figures 1 to 6. The embodiment of Figures 7 and 8 differs from the first embodiment in having a housing for a gear train 27 formed integrally with the end bearing support 2, replacing the radial surface 11 seen in Figure 2.

The shaft 8 projects through the bearing 7 into the housing 27 and a gear 28 is fitted on to the shaft 8.

A pinion 29 meshes with the gear 28. A gearbox output shaft 32 is mounted fast in the pinion 29 and projects through a bearing 33 mounted in an end cap 34 which is fitted on the outer end of casing 27. Shaft 32 forms an output from the gearbox. Shaft 32 is mounted in a bearing 30 at its inner end at the bottom of the housing.

To assemble the motor, the rotor comprising the shaft 8, armature 16 and commutator 17 is mounted in the frame and integral gear casing 27 as described previously.

The gear 28 is then fitted on the shaft 8 through the open end of hte casing 27. The pinion 29 and its associated shaft is then fitted into the bearing 30 which is housed in the bottom of the casing 27. The end cap 34 is then secured on the end of the housing 27, bearing 33 being slid with the end cap over the shaft 32.

The brush gear in the embodiment of Figures 7 and 8 is not shown but is the same as that of the embodiment of Figures 1 to 6.

A further difference from the embodiment of Figures 1 to 6 is the replacement of the outer casing 15 (which cannot now be fitted due to the presence of the gearbox casing 27) with an oute casing comprising two half cylindrical shells 35 which abut opposite the connecting members 3 and 4 along edges 37. The shells are held in position by bending integral tangs 36 radially inwardly to press against the side walls of cutouts in the connecting members 3, 4.

The recesses 38 in the connecting members 3, 4, which receive part of the brush carriers 22 are provided with lugs 39 for better axial location of the half shells 35 by means of the tangs 36.

In a preferred form, the outer surfaces of the connecting members 3, 4 are flattened and the abutting regions of the shells 35 are also flattened to mate with the flat surfaces of the connecting members and so provide a degree of circumferential alignment when assembling the half shells on the frame. Figure 6 better illustrates the provision of flats on the connecting member 3, 4 at the central region 31.

The gear train 28, 29 shown in Figure 7 is for illustrative purposes. It will be appreciated by those in the art that various gear trains may be incorporated in the housing 27, the particularly novel feature being the provision of the housing 27 integral with the frame 26. By way of example, the gear 28 could be the sun of a planetary gear with the ring teeth of a ring gear being provided on the inside of the housing 27, or the

0197760

pinion of a spur gear train contained in the housing.

Claims

1. An electric motor comprising a shaft (8); a rotor (16 and 17) mounted on the shaft (8); two bearings (7) supporting the shaft (8); first and second bearing supports (1 and 2) respectively receiving and supporting the two bearings (7); and connecting means (3 and 4) formed integrally with the first and second bearing supports (1 and 2); wherein the first and second bearing supports (1 and 2) are rigid and are formed, respectively, with coaxial first and second internal surfaces (5 and 6) which receive and support, in all radial directions, the bearings (7), wherein at least one of the bearing supports (1) has a radial slot (9), and wherein the bearings (7) have been introduced into the bearing supports by sliding the bearings along the motor shaft after the shaft has been inserted in the supports.

2. The electric motor of claim 1, in which a radial surface (11) extends perpendicularly to the axis (10) of the first and second internal surfaces (5 and 6).

3. The electric motor of claim 1 or claim 2, in which the connecting means (3 and 4) comprises at least two connecting members (3 and 4) formed integrally with the first and second bearing supports (1 and 2).

4. The electric motor of claim 3, in which the connecting members (3 and 4) are equi-angularly spaced around the axis (10) of the first and second internal surfaces (5 and 6).

5. The electric motor of claim 3 or claim 4, in which the connecting members (3 and 4) are provided with positioning means (12 and 13) for positioning stator field means (14).

6. The electric motor of anyone of the preceding claims, wherein the first and second internal surfaces (5 and 6) are at least part cylindrical.

7. The electric motor of anyone of the preceding claims, in which an outer casing (15) surrounds the frame; and stator magnetic field means (14) are supported by the frame and by the outer casing (15).

- 1 4 -

0197760

8. The electric motor of any one the preceding claims, in which a housing (27) for a gear train is integrally formed on an end of the frame comprising the bearing supports (1, 2) and the connecting members (3, 4).

9. The electric motor of any one of the preceding claims, in which the or an outer casing surrounds the connecting members 3, 4 and comprises a plurality of part cylindrical shells.

10. The electric motor of claim 1, comprising a pair of connecting members (3, 4) connecting the bearing supports (1, 2), said connecting memebrs being arranged diametrically opposite one another with respect to the shaft and having flattened radially outer surfaces, a pair of half cylindrical shells (35a, 35b) being mounted on the connecting members (3, 4), the shells (35a, 35b) being flattened in their region pf abutment to lie against the flat surfaces of the connecting members (3, 4).

FIG.1.

FIG.2.

FIG.3.

FIG.4.

FIG.5.

FIG.6.

FIG.7.

FIG.8.